# EUROPEAN PATENT APPLICATION

(11) **EP 4 687 203 A1**
(43) Date of publication of application: **04.02.2026**
(21) Application number: 24217109.8
(22) Date of filing: 03.12.2024
(51) Int. Cl.: H01M 50/209, H01M 50/298, H01M 50/503

(54) **BATTERY MODULE AND BATTERY PACK**

(30) Priority: 31.07.2024 WO PCT/CN2024/108689
(71) Applicant: Eve Energy Co., Ltd., Huizhou, Guangdong 516006 (CN)
(72) Inventor: ZHAO, Hengxin, Huizhou, 516006 (CN); LI, Zhimiao, Huizhou, 516006 (CN); HONG, Guoqiang, Huizhou, 516006 (CN); GUAN, Xinli, Huizhou, 516006 (CN); HUANG, Guojian, Huizhou, 516006 (CN); QI, Dongrong, Huizhou, 516006 (CN); DOU, Peng, Huizhou, 516006 (CN); LIU, Pengcheng, Huizhou, 516006 (CN)
(74) Representative: HGF

(57) **Abstract**

Provided are a battery module and a battery pack. The battery module includes multiple battery cells (32), multiple first connection members (33) and multiple second connection members (34). A battery cell (32) has an end surface, and the end surface is provided with a tab (322). The multiple first connection members (33) and the multiple second connection members (34) are flexible members. A first connection member of the multiple first connection members (33) has a first connection portion (331), a second connection portion (332) and a bend (333). The first connection portion (331) and the second connection portion (332) are in sheet-like form. Two ends of the bend (333) are connected to the first connection portion (331) and the second connection portion (332), separately. The multiple battery cells (32) are disposed in a superimposed manner. The first connection portion (331) is connected to tabs (322) of two adjacent battery cells (32). The multiple second connection members (34) are in sheet-like form. The second connection member (34) is connected between second connection portions (332) of two adjacent first connection members (33, and the second connection member (34), the first connection portion (331) and the second connection portion (332) are superimposed on the end surface. When the battery cell expands, the first connection member and the second connection member can more easily absorb the expansion of the battery cell by generating deformation, thereby ensuring the stability of connection between the battery cells.

## Description

### TECHNICAL FIELD

The present application relates to the technical field of lithium batteries, for example, a battery module and a battery pack.

### BACKGROUND

The pouch lithium-ion battery cell has the "deep breathing" effect in the free state during the charging and discharging process, which specifically presents as a significant volume change in the battery cell. Compared with the no power state, a lithium metal battery expands in the full power state, that is to say, the "deep breathing" effect of the battery cell causes expansion of the battery cell, which causes the non-uniformity in thickness, the slip phenomenon between battery cells, and the deformation of the lithium metal battery, and thus is disadvantageous for the charging and discharging cycle. Therefore, the restraining force needs to be applied in the thickness direction of the battery cell to ensure the cycle.

To improve the energy density of the battery, multiple battery cells are disposed within the battery pack, and the multiple battery cells are connected in series and in parallel through a printed circuit board (PCB). To prevent the PCB and tabs connected to the PCB from being broken, restraints are generally added to four side surfaces of the battery cell. However, the slip of the battery cell due to the "deep breathing" effect may cause the dislocation between the battery cell and the PCB, and may, in severe cases, cause the PCB to break or cause the tabs to be torn apart, resulting in the overall failure of the battery pack and the low reliability and poor safety of the battery pack.

### SUMMARY

The present application provides a battery module. The battery module includes multiple battery cells, multiple first connection members and multiple second connection members. A battery cell includes an end surface, and the end surface is provided with a tab. The multiple first connection members and the multiple second connection members are flexible members, a first connection member includes a first connection portion, a second connection portion and a bend, the first connection portion and the second connection portion are in sheet form, and two ends of the bend are connected to the first connection portion and the second connection portion, respectively. The multiple battery cells are disposed in a superimposed manner, the first connection portion is connected to tabs of two adjacent battery cells, the multiple second connection members are in sheet-like form, a second connection member is configured to connect second connection portions of two adjacent first connection members, and the second connection member, the first connection portion and the second connection portion are superimposed on the end surface of the battery cell.

The present application provides a battery pack. The battery pack includes a box body and a battery module. The battery module is disposed within the box body, and a side surface of the battery module is attached to an inner wall of the box body.

The beneficial effects of the present application are as follows. The multiple first connection members and the multiple second connection members are provided so that the battery cells are separately connected through the first connection members, and the multiple first connection members and the multiple second connection members cooperate to replace the original integral PCB. When a battery cell expands, the first connection member and the second connection member can more easily absorb the expansion of the battery cell by generating deformation, preventing the tab from being torn off, and preventing the first connection member and the second connection member from being separated from the tab of the battery cell. In this manner, the stability of the connection between the battery cells can be ensured and the open circuit in the battery module is prevented. The second connection member, the first connection portion and the second connection portion are set to be superimposed on the end surface of the battery cell so that the overall shape of the battery module can be approximately a cuboid. Moreover, the first connection member and the second connection member have flexibility, so the external restraint structural member can provide compaction and restraint for six side surfaces of the battery module, the slip phenomenon in an expansion process of the battery cell is alleviated, the deformation of the battery module is reduced, and thus the reliability and safety of the battery module are improved.

### BRIEF DESCRIPTION OF THE DRAWINGS

FIG. 1 is a schematic diagram one of a connection between a battery cell and a first connection member according to some embodiments of the present application.
FIG. 2 is a schematic diagram two of a connection between a battery cell and a first connection member according to some embodiments of the present application.
FIG. 3 is a schematic diagram three of a connection between a battery cell and a first connection member according to some embodiments of the present application.
FIG. 4 is a schematic diagram one of a connection between a battery cell, a first connection member and a second connection member according to some embodiments of the present application.
FIG. 5 is a schematic diagram two of a connection between a battery cell, a first connection member and a second connection member according to some embodiments of the present application.
FIG. 6 is a schematic diagram of a battery module according to some embodiments of the present application.
FIG. 7 is a schematic diagram one of a connection between a battery cell and a first connection member according to some other embodiments of the present application.
FIG. 8 is a schematic diagram two of a connection between a battery cell and a first connection member according to some other embodiments of the present application.
FIG. 9 is a schematic diagram three of a connection between a battery cell and a first connection member according to some other embodiments of the present application.
FIG. 10 is a schematic diagram of a connection between a battery cell, a first connection member and a second connection member according to some other embodiments of the present application.
FIG. 11 is a schematic diagram of a battery module according to some other embodiments of the present application.
FIG. 12 is a schematic sectional view of a battery pack according to some embodiments of the present application.
FIG. 13 is an exploded schematic view of a battery pack according to some embodiments of the present application.
FIG. 14 is a schematic diagram of a battery pack according to some embodiments of the present application (one splice plate is not shown).
FIG. 15 is a schematic diagram of a second buffer member according to some embodiments of the present application.
FIG. 16 is a schematic diagram of a box body and a separator according to some embodiments of the present application (one splice plate is not shown).
FIG. 17 is a structural diagram of an electrode tab according to some embodiments of the present application.

### List of reference numbers

- 1: box body
- 11: splice plate
- 12: separator
- 13: current output seat
- 2: second buffer member
- 21: wiring groove
- 210: wire
- 22: weight reduction hole
- 3: battery module
- 31: power transmission side surface
- 32: battery cell
- 321: edge sealing portion
- 322: tab
- 3221: third connection portion
- 3222: fourth connection portion
- 323: body portion
- 33: first connection member
- 331: first connection portion
- 332: second connection portion
- 333: bend
- 34: second connection member
- 35: supporting member
- 36: first buffer member

### DETAILED DESCRIPTION

In the description of the present application, terms "joined", "connected" and "fixed" are to be understood in a broad sense unless otherwise expressly specified and limited. For example, the term "connected" may refer to "securely connected", "detachably connected" or "integrated", may refer to "mechanically connected" or "electrically connected", or may refer to "connected directly", "connected indirectly through an intermediary" or "internal connection between two elements or interaction between two elements". For those of ordinary skill in the art, specific meanings of the preceding terms in the present application may be understood based on specific situations.

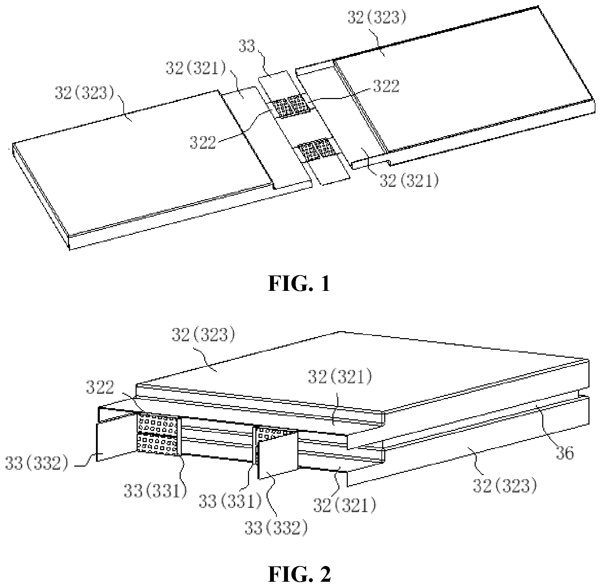

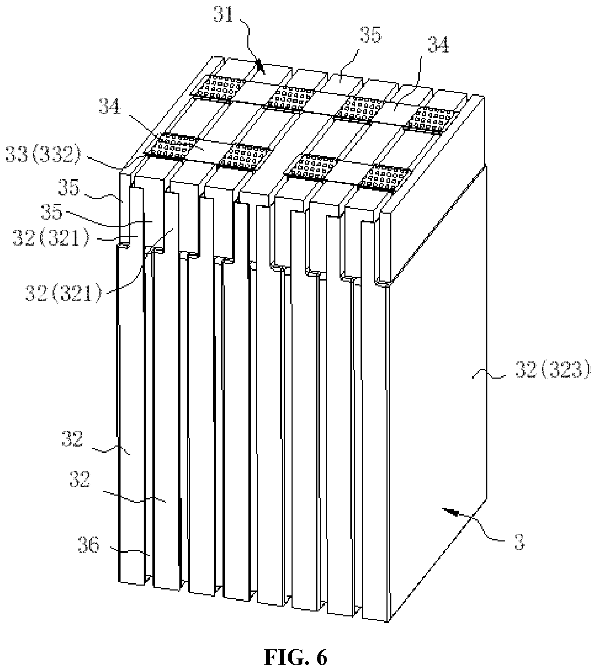

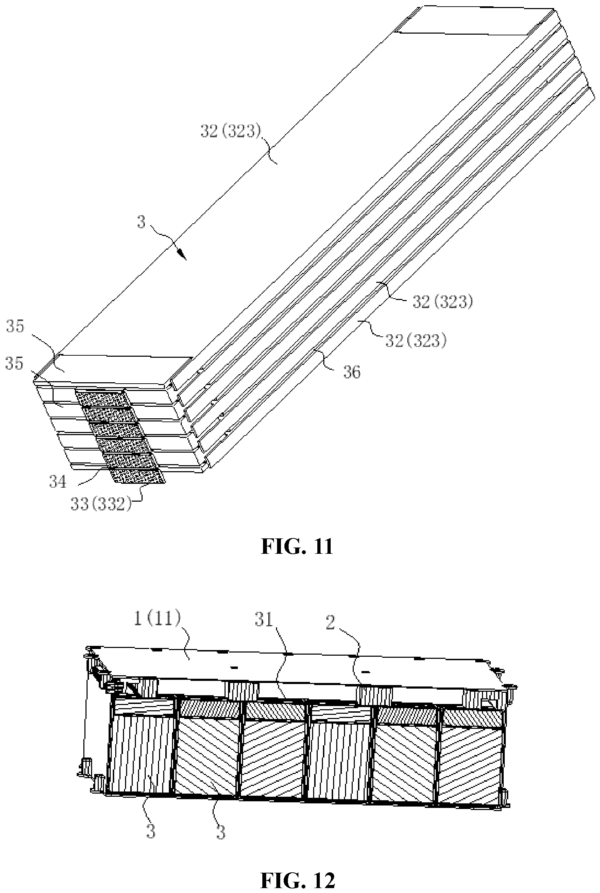

As shown in FIG. 6 and FIG. 11 (reference is made to FIG. 1 to FIG. 5, and FIG. 7 to FIG. 10 for some of the reference numerals), the present application provides a battery module 3. The battery module 3 includes multiple battery cells 32, multiple first connection members 33 and multiple second connection members 34. A battery cell 32 has an end surface, and the end surface is provided with a tab 322. The multiple first connection members 33 and the multiple second connection members 34 are flexible members, that is, the multiple first connection members 33 and the multiple second connection members 34 have flexibility. The multiple first connection members 33 and the multiple second connection members 34 may be deformed under pressure. A first connection member 33 has a first connection portion 331, a second connection portion 332 and a bend 333. The first connection portion 331 and the second connection portion 332 are in sheet-like form. Two ends of the bend 333 are connected to the first connection portion 331 and the second connection portion 332, respectively. The multiple battery cells 32 are disposed in a superimposed manner. The first connection portion 331 is connected to tabs 322 of two adjacent battery cells 32. The multiple second connection members 34 are in sheet-like form, and the second connection member 34 is connected between second connection portions 332 of two adjacent first connection members 33. The second connection member 34, the first connection portion 331 and the second connection portion 332 are superimposed on the end surface of the battery cell.

The multiple first connection members 33 and the multiple second connection members 34 are provided so that battery cells 32 among the multiple battery cells 32 are separately connected through the first connection portion 331 and the second connection portions 332 of the first connection members 33 are connected through the second connection members 34 to replace an integral PCB. In this embodiment, when a battery cell 32 expands, the first connection member 33 and the second connection member 34 can more easily absorb the expansion of the battery cell 32 by generating deformation, to prevent the tab 322 from being torn off, and also prevent the first connection member 33 and the second connection member 34 from being separated from the tab 322 of the battery cell 32, thereby ensuring the stability of the connection between the battery cells 32 and preventing the open-circuit in the battery module 3. The second connection member 34, the first connection portion 331 and the second connection portion 332 are disposed to be superimposed on the end surface of the battery cell 32 so that the overall shape of the battery module 3 may be approximately a cuboid. Moreover, the first connection member 33 and the second connection member 34 have flexibility, the external restraint structural member may provide compaction and restraint for six side surfaces of the battery module 3, so that the slip phenomenon in an expansion process of the battery cell 32 is alleviated, the deformation of the battery module 3 is reduced, and thus the reliability and safety of the battery module are improved.

In this embodiment, each of the first connection member 33 and the second connection member 34 is a nickel piece, and the first connection member 33 is bent to form the first connection portion 331, the bend 333 and the second connection portion 332.

In this embodiment, the first connection member 33 and the second connection member 34 made of the nickel piece are adopted so that the weight of the battery module 3 can be reduced to achieve a light-weight design.

With reference to FIGS. 6 and 11, the battery module 3 includes a supporting member 35. The battery cell 32 has a body portion 323 and an edge sealing portion 321. The thickness of the body portion 323 is greater than the thickness of the edge sealing portion 321. The supporting member 35 is disposed between edge sealing portions 321 of two adjacent battery cells 32, the supporting member 35 abuts against a side surface of the edge sealing portion 321, and side surfaces of a part of supporting members 35 are attached to both the first connection member 33 and the second connection member 34, and side surfaces of the other part of supporting members 35 are separately attached to the second connection member 34. In this embodiment, the battery cell 32 is a pouch battery, and the edge sealing portion 321 is an aluminum plastic film edge sealing, which belongs to an inherent structure of the pouch battery. The supporting member 35 is provided so that the supporting member 35 may fill a gap between edge sealing portions 321 of two adj acent battery cells 32, thereby reducing the deformation of the edge sealing portion 321. Moreover, the supporting member 35 may provide support for the first connection member 33 and the second connection member 34, thereby reducing the curved degree of the first connection portion 331, the second connection portion 332 and the second connection member 34, and thus improving the reliability of the battery module 3.

In this embodiment, the supporting member 35 is a flexible supporting block. It is to be understood that, the battery cell 32 may expand in a charging and discharging process, the volume of the battery cell 32 changes, and the supporting member 35 is configured as the flexible supporting block to have flexibility; therefore, the supporting member 35 may absorb the deformation of the battery cell 32 to some extent, thereby reducing the deformation of the battery module 3 and improving the reliability and the safety of the battery module 3. In some embodiments, the supporting member 35 may be an ethylene-vinyl acetate copolymer (EVA copolymer) foam.

Referring to FIG. 6 and FIG. 11, the hardness of supporting members 35 located on two sides of the battery module 3 may be greater than the hardness of supporting members 35 located in the center of the battery module 3. The supporting members 35 located on the two sides of the battery module 3 are directly in contact with the external restraint structural member to limit the battery cells 32.

A first buffer member 36 is disposed between two adj acent battery cells 32, and the first buffer member 36 is in sheet-like form. The first buffer member 36 is provided so that the deformation of the battery cell 32 may be absorbed, the deformation of the battery module 3 may be reduced, and the reliability and safety of the battery module 3 may be improved. The first buffer member 36 may be an EVA foam.

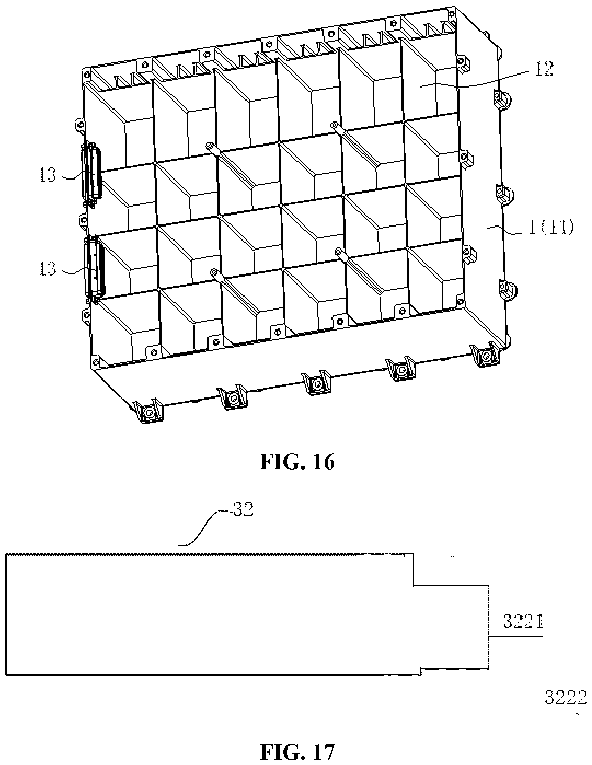

As shown in FIG. 17, the tab 322 of the battery cell 32 includes a third connection portion 3221 and a fourth connection portion 3222. The fourth connection portion 3222 of the tab 322 is connected to the core in the battery cell 32 through the third connection portion 3221 of the tab 322. Both the third connection portion 3221 and the fourth connection portion 3222 are in sheet-like form. The fourth connection portion 3222 is perpendicularly connected to the third connection portion 3221, that is, the sheet-like tab 322 is bent 90° to form the third connection portion 3221 and the fourth connection portion 3222. The fourth connection portion 3222 is parallel to the end surface of the battery cell 32, and the fourth connection portion 3222 is connected to the first connection portion 331. The fourth connection portion 3222 is disposed to be parallel to the end surface of the battery cell 32 and be connected to the first connection portion 331 so that bending of a connection position between the tab 322 and the first connection member 33 can be avoided, thereby reducing the difficulty of connecting the tab 322 and the first connection member 33 and reducing the impact of bending on the connection effect, and thus improving the reliability of connecting the tab 322 and the first connection member 33.

In this embodiment, the first connection portion 331 is welded to the tab 322, and the second connection portion 332 is also welded to the second connection member 34. An ultrasonic welding manner, a laser welding manner or other welding manners may be used.

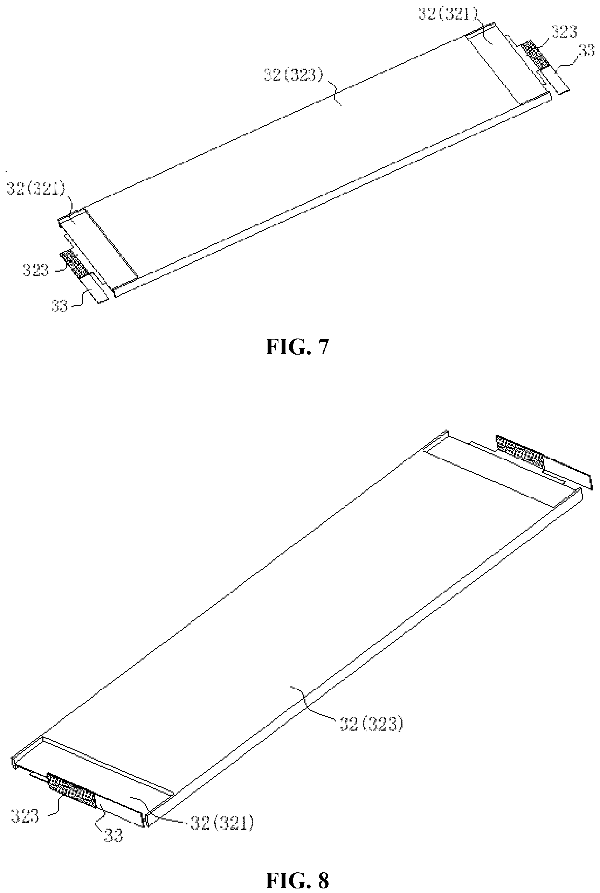

The battery cell 32 generally has two tabs 322. One tab 322 is used as a positive electrode, and the other tab 322 is used as a negative electrode. Two tabs 322 of a battery cell 32 shown in FIG. 1 to FIG. 6 are located on the same side of the battery cell 32, which is denoted as a single-head-tab battery. The electrode tab 322 of the single-head electrode-tab-outlet battery projects from the same end surface of the battery cell 32. Two tabs 322 of a battery cell 32 shown in FIG. 7 to FIG. 11 are located on two sides of the battery cell 32, respectively, which is denoted as a dual-head-tab battery. The tabs 322 of the dual-head tab-outlet battery project from the two end surfaces of the battery cell 32.

Referring to FIG. 1 to FIG. 6, for the single-head tab-outlet battery, the battery module 3 may be manufactured by using the following steps.

In step 101, referring to FIG. 1, a (positive) tab 322 of one battery cell 32 (single-head electrode-tab-outlet battery) and a (negative) tab 322 of another battery cell 32 are connected and combined by using the first connection member 33 (nickel sheet) through ultrasonic welding.

In step 102, referring to FIG. 2, on the basis of FIG. 1, tabs 322 of two battery cells 32 (single-end-tab batteries) are bent by 90°, the two battery cells 32 (single-end-tab batteries) are superimposed, one first buffer member 36 is placed between the two battery cells 32 (single-end-tab batteries), and then the first connection member 33 (a nickel sheet) is bent by 90° so that the first connection member 33 has an L-shape. A battery combination is formed in this step.

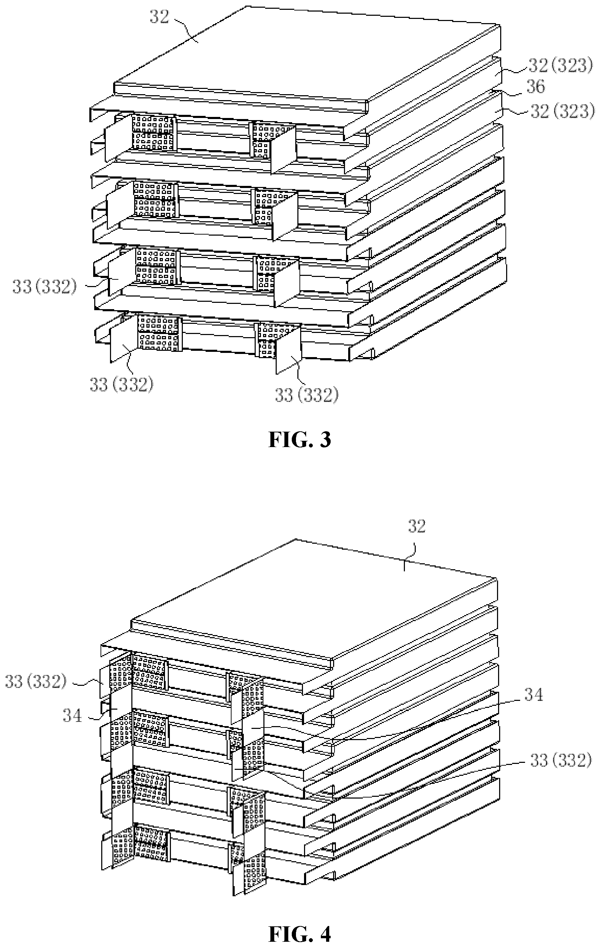

In step 103, referring to FIG. 3, multiple battery combinations shown in FIG. 2 are superimposed, and it is ensured that one first buffer member 36 is placed between every two battery cells 32 (single-end-tab batteries).

In step 104, referring to FIG. 4, on the basis of FIG. 3, the battery combinations shown in FIG. 2 are connected by using the second connection members 34 according to the series and parallel connection design requirements of circuits in the battery module 3, and the second connection member 34 (nickel sheet) is connected between the second connection portions 332 of the first connection member 33 (nickel sheet) in an ultrasonic welding manner.

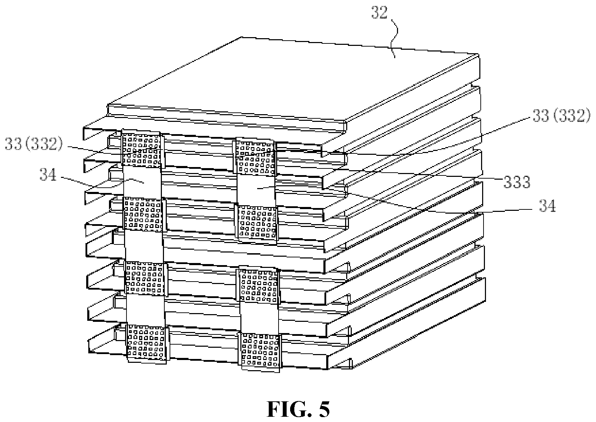

In step 105, referring to FIG. 5, on the basis of FIG. 4, an excess portion of the first connection member 33 (nickel sheet) is cut off, and then the first connection member 33 (nickel sheet) continues to be bent by 90° to form the bend 333 of the first connection member 33. In this case, the first connection portion 331 and the second connection portion 332 of the first connection member 33 are superimposed.

In step 106, referring to FIG. 6, on the basis of FIG. 5, the supporting member 35 is filled into the gap between the battery cells 32.

Referring to FIG. 7 to FIG. 11, for the dual-head-tab battery, the battery module 3 may be manufactured by using the following steps.

In step 201, referring to FIG. 7, a (positive) tab 322 and a (negative) tab 322 of the battery cell 32 (dual-head-tab battery) are ultrasonically welded to two first connection members 33 (nickel sheet), respectively.

In step 202, referring to FIG. 8, the tab 322 is bent by 90° on the basis of FIG. 7.

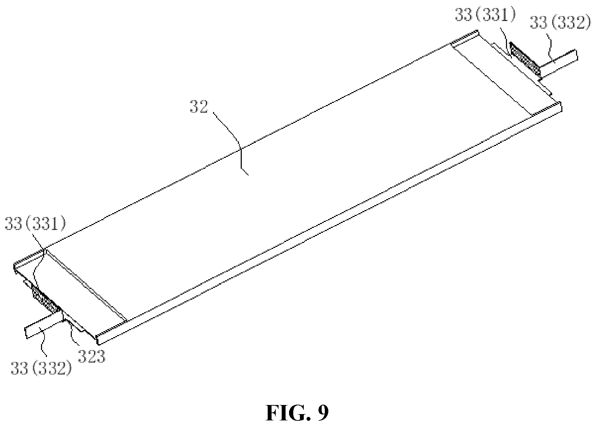

In step 203, referring to FIG. 9, the first connection member 33 (nickel sheet) is bent by 90° on the basis of FIG. 8.

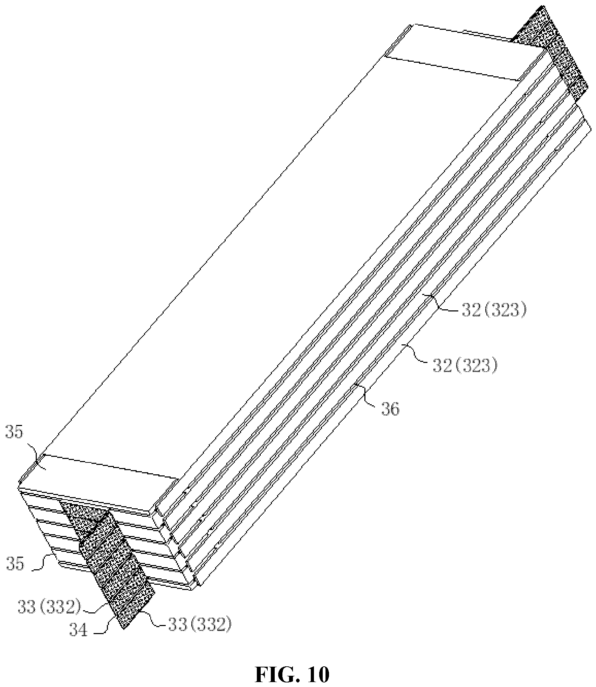

In step 204, referring to FIG. 10, multiple combinations of the battery cell 32 (dual-head-tab battery) and the first connection member 33 shown in FIG. 9 are stacked and superimposed, one first buffer member 36 is placed between every two battery cells 32 (dual-head-tab batteries), a groove of the tab 322 of the battery cell 32 is padded to the ultrasonic welding position of the tab 322, and then the multiple battery cells 32 (dual-head-tab batteries) are connected by using the second connection members 34 (nickel sheet) according to the series and parallel connection design requirements of circuits in the battery module 3.

In step 205, referring to FIG. 11, the first connection member 33 (nickel sheet) is bent by 90° on the basis of FIG. 10. In this case, the first connection portion 331 and the second connection portion 332 of the first connection member 33 are superposed.

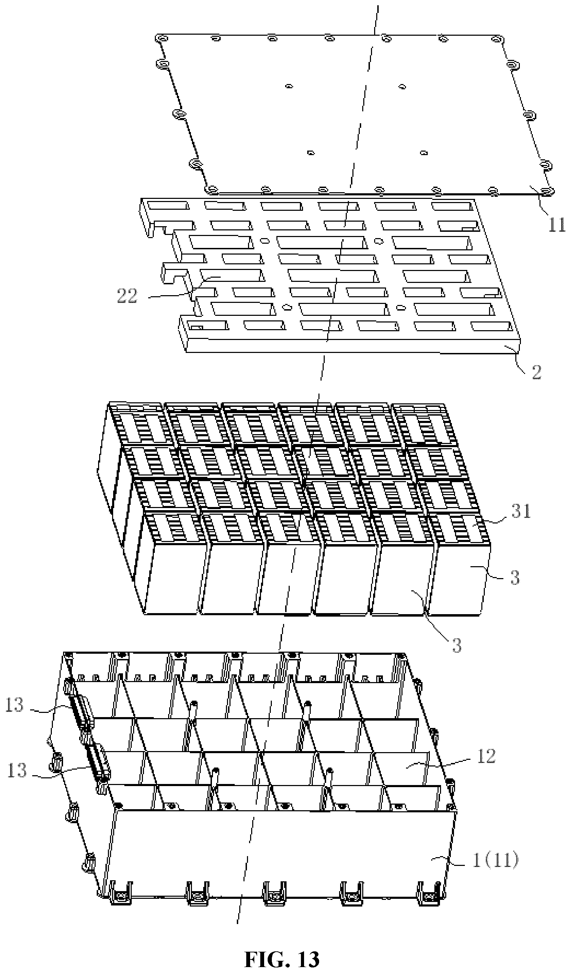

Referring to FIG. 12 to FIG. 16, this embodiment further provides a battery pack. The battery pack includes a box body 1 and the battery module 3 in any one of the embodiments. The battery module 3 is disposed within the box body 1, and a side surface of the battery module 3 is attached to an inner wall of the box body 1. The box body 1 in this embodiment is denoted as the restraint structural member mentioned in the embodiments. The shape of the battery module 3 is a cube to reduce, the design difficulty of the restraint structural member, that is, the battery module 3 may be restrained by using an intra-box plane structure, thereby reducing the design difficulty of the battery pack and the cost.

The battery pack further includes a wire 210 and a second buffer member 2. A current output seat 13 is disposed on the box body 1. The battery module 3 has a power transmission side surface 31 (end surfaces of multiple battery cells 32 are spliced to form the power transmission side surface 31). The second connection members 34 of the battery module 3 are disposed on the power transmission side surface 31. Two ends of the wire 210 are connected to the current output seat 13 and the second connection members 34, respectively. The second buffer member 2 is disposed between the power transmission side surface 31 and the inner wall of the box body 1. The second buffer member 2 is provided so that the second buffer member 2 can absorb the expansion of the battery cell 32, to reduce the extrusion of the wire and improve the reliability of the battery pack. The second buffer member 2 may be an EVA foam.

A wiring groove 21 is disposed within the second buffer member 2, and the wire 210 is disposed within the wiring groove 21. The wiring groove 21 is provided so that the extrusion of the battery cell 32 on the wire 210 in a collision state can be further reduced, and thus the reliability of the battery pack is improved.

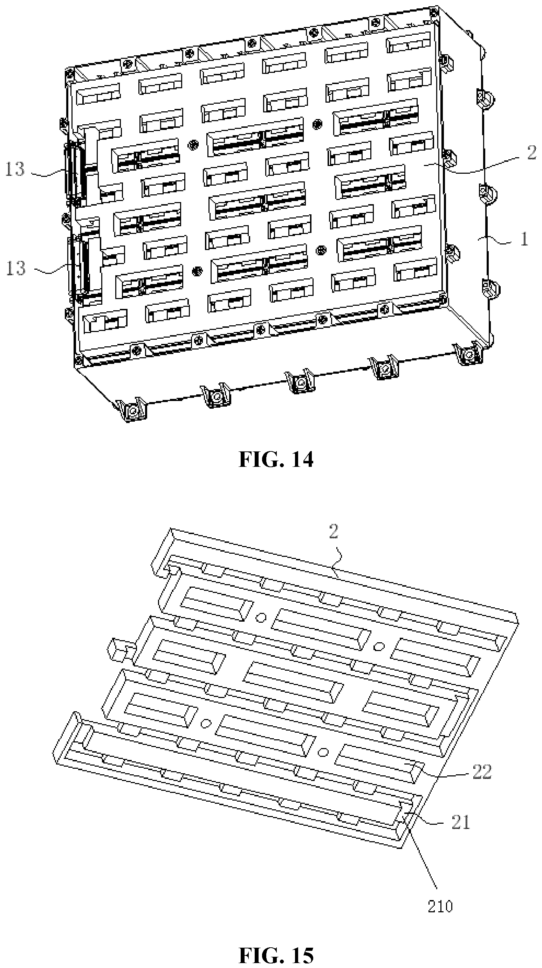

Referring to FIG. 15, the second buffer member 2 is also provided with a weight reduction hole 22. The weight reduction hole 22 is provided so that the weight of the second buffer member 2 can be reduced to reduce the overall weight of the battery pack and implement the light-weight design of the battery pack.

Multiple battery modules 3 are disposed within the box body 1. Referring to FIG. 16, multiple separators 12 are also disposed within the box body 1, the separator 12 is fixed to the inner wall of the box body 1, a separator 12 is disposed between two adjacent battery modules 3, and the separator 12 is attached to a side surface of the battery module 3. The separator 12 is provided so that the separator 12 may separate the space within the box body 1, and each battery module 3 is separately restrained, thereby avoiding the direct contact between the battery modules 3, improving the restraining effect on the battery module 3, and thus improving the reliability of the battery pack.

In this embodiment, the box body 1 is a cuboid, the box body 1 is formed by splicing and enclosing six splice plates 11, and each separator 12 is fixed and connected to a corresponding splice plate 11.

## Claims

1. A battery module, comprising a plurality of battery cells (32), a plurality of first connection members (33) and a plurality of second connection members (34);
wherein a battery cell of the plurality of battery cells (32) has an end surface, and the end surface is provided with a tab (322);
the plurality of first connection members (33) and the plurality of second connection members (34) are flexible members, a first connection member of the plurality of first connection members (33) comprises a first connection portion (331), a second connection portion (332) and a bend (333), the first connection portion (331) and the second connection portion (332) are in sheet-like form, and two ends of the bend (333) are connected to the first connection portion (331) and the second connection portion (332), respectively; and
the plurality of battery cells (32) are disposed in a superimposed manner, the first connection portion (331) is connected to tabs (322) of two adj acent battery cells among the plurality of battery cells (32), the plurality of second connection members (34) are in sheet-like form, a second connection member (34) of the plurality of second connection members (34) is configured to connect second connection portions (332) of two adjacent first connection members (33) among the plurality of first connection members (33), and the second connection member (34), the first connection portion (331) and the second connection portion (332) are superimposed on the end surface of a respective battery cell (32).

2. The battery module of claim 1, further comprising a supporting member (35), wherein the battery cell (32) comprises a body portion and an edge sealing portion, a thickness of the body portion is greater than a thickness of the edge sealing portion (321), the supporting member (35) is disposed between edge sealing portions (321) of two adjacent battery cells (32) among the plurality of battery cells (32), and a side surface of the supporting member (35) is attached to at least one of a respective first connection member (33) or a respective second connection member (34).

3. The battery module of claim 2, wherein the supporting member (35) is a flexible supporting block.

4. The battery module of claim 1, wherein a first buffer member (36) is disposed between two adjacent battery cells (32) among the plurality of battery cells (32), and the first buffer member (36) is in sheet-like form.

5. The battery module of claim 1, wherein the tab (322) comprises a third connection portion (3221) and a fourth connection portion (3222), the fourth connection portion (3222) is connected to a core within the battery cell (32) through the third connection portion (3221), the third connection portion (3221) and the fourth connection portion (3222) are in sheet-like form,
the fourth connection portion (3222) is perpendicularly connected to the third connection portion (3221), the fourth connection portion (3222) is parallel to the end surface of the battery cell (32), and the fourth connection portion (3222) is connected to the first connection portion (331).

6. A battery pack, comprising a box body (1) and the battery module (3) of any one of claims 1 to 5, wherein the battery module (3) is disposed in the box body (1), and a side surface of the battery module (3) is attached to an inner wall of the box body (1).

7. The battery pack of claim 6, further comprising a wire (210) and a second buffer member (2), wherein a current output seat (13) is disposed on the box body (1), the battery module (3) has a power transmission side surface (31), the plurality of second connection members (34) of the battery module (3) are disposed on the power transmission side surface (31), two ends of the wire (210) are connected to the current output seat (13) and the plurality of second connection members (34), respectively, and the second buffer member (2) is disposed between the power transmission side surface (31) and the inner wall of the box body (1).

8. The battery pack of claim 7, wherein a wiring groove (21) is disposed within the second buffer member (2), and the wire (210) is arranged within the wiring groove (21).

9. The battery pack of claim 7, wherein the second buffer member (2) is provided with a weight reduction hole (22).

10. The battery pack of claim 6, wherein a plurality of battery modules (3) are provided, a plurality of separators (12) are also disposed within the box body (1), the plurality of separators (12) are fixed to the inner wall of the box body (1), a separator of the plurality of separators (12) is disposed between two adjacent battery modules (3), and the separator (12) is attached to the side surface of a respective battery module (3) of the plurality of battery modules (3).
